# EUROPÄISCHE PATENTSCHRIFT

(11) **EP 0 735 667 B1**
(45) Veröffentlichungstag und Bekanntmachung des Hinweises auf die Patenterteilung: **20.01.1999**
(21) Anmeldenummer: 96103097.0
(22) Anmeldetag: 01.03.1996
(51) Int. Cl.: H02P 8/00, H02K 37/24, B60H 1/00

(54) **Einrichtung zum Antrieb eines Stellelements mittels eines Schrittmotors**
Stepping motor device for driving a servo-control element
Dispositif à moteur pas-à-pas pour l'entraînement d'un élément de servo-moteur

(30) Priorität: 31.03.1995 DE 19511865
(43) Veröffentlichungstag der Anmeldung: 02.10.1996
(73) Patentinhaber: DAIMLER-BENZ AKTIENGESELLSCHAFT, 70567 Stuttgart (DE); SAIA AG, CH-3280 Murten (CH)
(72) Erfinder: Heinle, Dieter, 73655 Plüderhausen (DE); Straub, Wolfgang, 73326 Deggingen (DE); Blessing, Jürgen, 75323 Bad Wildbad (DE); Boillat, Pierre, 3280 Meyriez (CH)

(56) Entgegenhaltungen:
- EP-A- 0 207 295
- EP-A- 0 433 219
- WO-A-91/07811
- DE-A- 2 925 216
- US-A- 4 262 240
- US-A- 4 947 097
- ELECTRONIC DESIGN, Bd. 43, Nr. 16, 7.August 1995, Seite 87 XP000531678 J.PARRY & AL.: "Read back-emf at low motor speeds"

## Beschreibung

Die Erfindung betrifft eine Einrichtung zum Antrieb eines Stellelements mittels eines Schrittmotors nach der Gattung des Anspruchs 1.

Die gattungsbildende **EP 0 207 295 A1** beschreibt einen Thermostaten bei dem ein Schrittmotor in stromlosem Zustand eine gewählte Einstellung auf dem dieser Einstellung entsprechenden magnetischen Rastpunkt festhält, wobei der nicht angesteuerte Schrittmotor bei manueller Verdrehung Signale abgibt, die Aufschluß über die Zahl der manuellen Verstellschritte geben. Dabei kann der Thermostat durch Beaufschlagung des Schrittmotors mit Antriebsimpulsen gleichwohl auf elektrischem Wege auf jede beliebige Einstellung gebracht werden. Dabei findet ein Mikroprozessor nebst Datenspeicher zur Aufbereitung von Schritttreibersignalen Verwendung.

Der Beitrag **"Read Back-EMF At Low Motor Speeds"** auf S. 87 der FZ Electronic Design v. 07.08.1995 beschreibt eine Schaltungsanordnung i.V. mit einem Schrittmotor, bei welcher in Phasen steuerbarer Nichtbeaufschlagung einzelner Antriebswicklungen des Motors die in einer momentan unbestromten Wicklung jeweils induzierte Spannung zum Zwecke der rotorstellungsabhängigen Ansteuerung der Antriebswicklungen erfaßt wird. Zu diesem Zweck wird diese Spannung mit einer festen, für alle Wicklungen identischen Referenzspannung verglichen. Dabei sind die Vergleicher als Bestandteil einer integrierten Ansteuerschaltung zum Betrieb an einer separaten Betriebsspannung ausgeführt, welche erheblich niedriger als die Versorgungsspannung des Motors bzw. seiner Antriebswicklungen ist. Um diese Spannungsdifferenz zu überbrücken, werden die an den Antriebswicklungen unmittelbar abgreifbaren Absolutwerte o.g. Spannungen mittels Stromspiegel abschwächungsfrei in den Eingangsspannungsbereich der Niederspannungs-Komparatoren als Bestandteil der integrierten Ansteuerschaltung pegelverschoben. Ein Nachteil dieser Lösung besteht in der schlechten Unterdrückung von Störsignalen aus dem speisenden Versorgungsnetz.

Aus der **DE 29 08 182 C2** ist eine Ansteuerschaltung für einen Schrittmotor bekannt, bei welcher vorgesehen ist, daß mittels eines Inhibit-Signals ein Betrieb im Laufmodus und ein Betrieb im Haltemodus realisiert wird. Zur Positionserkennung werden dort fotoelektrische Wandler verwendet. Dabei wird das Ziel verfolgt, den Rotor des Schrittmotors auch von Hand in im Schrittbetrieb auftretenden Positionen einstellen zu können.

Die alternative Verwendung eines digitalen Winkelsensors bei einer Vorrichtung zur kontrollierten Steuerung eines Schrittmotors ist aus der **DE 28 05 363 C2** bekannt. Aus der **WO 91/07811** ist bekannt, aus den Ansteuersignalen eines Schrittmotors eine Winkelinformation abzuleiten.

Die **US 5,194,787** beschreibt eine Schaltungsanordnung für einen kollektorlosen Gleichstrommotor mit einer Mehrzahl von stehenden und im Ring geschalteten Antriebswicklungen, die über einen von einer monostabilen Kippschaltung getriggerten Ringzähler mit nachgeschalteten Treiberstufen zeitabschnittsweise mit Strom beaufschlagt werden. Zur Aufbereitung des die monostabile Kippschaltung eingangsseitig triggernden Signals werden Diagonal spannungen des Wicklungsringes mittels Komparatoren miteinander verglichen.

In der **DE-AS 1 303 612** ist eine Überwachungseinrichtung für einen impulsgesteuerten Schrittmotor beschrieben, der mehrere Statorwicklungen und einen Permanentmagneten als Rotor aufweist und kollektorlos von einer Steuerschaltung beaufschlagt wird, welche Eingangsimpulse auf die Statorwicklungen verteilt. Dabei leistet jene Einrichtung eine Überwachung dahingehend, daß jeder Impuls, der auf die Steuerschaltung gelangt, am Motor wirksam wird, d.h. eine In-/Dekrementierung der Drehstellung des Rotors tatsächlich bewirkt. Dazu werden optische Mittel zur Sensierung eingesetzt.

Die Veröffentlichung -- "Closed-Loop Control of a 3.6' Floppy-Disk Drive PM Motor by Back-EMF Sensing" von B.C. Kuo, Department of Electrical Engineering, University of Illinois at Champaign-Urbana und K. Butts, General Motors Corporation, Warren Michigan -- beschreibt eine Regeleinrichtung zur Verbesserung des Anlaufverhaltens, der Drehzahlführung und Drehzahlstabilisierung eines impulsgesteuerten Motors eines Diskettenlaufwerks, bei dem die in den Antriebswicklungen jeweils induzierten Spannungen in Abhängigkeit von Stellung und Drehzahl des Rotors zu dessen Steuerung innerhalb eines geschlossenen Regelkreises ausgewertet werden. Auf diese Weise kann auf optische Mittel verzichtet werden.

Es ist Aufgabe der Erfindung, eine besonders einfache Einrichtung zum Antrieb eines Stellelements mittels eines Schrittmotors vorzuschlagen, welche einerseits die elektrische Betriebsansteuerung des Schrittmotors ermöglicht, andererseits aber auch dann, wenn der Rotor des Schrittmotors anschließend nichtelektrisch, insbesondere manuell, verdreht wird, stets Aufschluß über die so jeweils akuell erreichte Position als Ausgangsposition für die nächste elektrische Ansteuerung leistet.

Diese Aufgabe wird bei einer gattungsgemäßen Einrichtung mit den Merkmalen des Anspruchs 1 gelöst.

Die vorgeschlagene Einrichtung zum Antrieb eines Stellelements mittels eines Schrittmotors umfaßt außer dem Schrittmotor eine Antriebsimpulse für den Schrittmotor erzeugende Ansteuerschaltung. Der Rotor des Motors ist dreh- und/oder kraftschlüssig mit dem Stellelement (11) verbunden, so daß letzteres samt Rotor auch ohne elektrische Ansteuerung des Schrittmotors durch Einwirken einer/s externen Kraft oder Moments verstellbar ist. Erfindungsgemäß weist der Schrittmotor wenigstens zwei Antriebswicklungen auf und der Rotor des Schrittmotors ist permanentmagnetisch. Die Ansteuerschaltung weist wenigstens zwei Eingänge zum Empfang von wenigstens zwei Stellungssignalen und einen Ausgang zur Ausgabe eines Inhibit-Signals sowie Schritttreiberstufen auf, von deren Ausgängen die wenigstens zwei Antriebswicklungen mit Schrittimpulsen beaufschlagbar sind.

Die Schritttreiberstufen weisen jeweils einen besonderen Eingang zum Empfang besagten Inhibit-Signals auf und sind so beschaffen, daß sie bei Empfang eines Inhibit-Signals den ausgangsseitig angesteuerten Wicklungsanschluß hochohmig freischalten. Je zwei Anschlüsse der wenigstens zwei voneinander unabhängigen Wicklungen des Schrittmotors sind mit den zwei Eingängen wenigstens zweier Differenzverstärker wirkverbunden, welche mit einer definierten Hysterese ihres Eingangs-/Ausgangsverhaltens ausgebildet sind. Die Ausgangssignale dieser Verstärker werden als Iststellungssignale verarbeitet und sind zu diesem Zweck an die Ansteuerschaltung zurückgeführt.

Diese Einrichtung weist zunächst den Vorteil auf, daß der Schrittmotor im elektrisch nicht angesteuerten Zustand als Encoder nutzbar ist, der in Verbindung mit der Ansteuerschaltung die Position des Stellelements beständig aktualisiert unabhängig davon, auf welche Weise sie zustandegekommen ist.

Des weiteren können mit dieser Einrichtung auch vorteilhaft Lageänderungen und Verstellungen eines Elements, das in Verstellkraftschluß mit dem Schrittmotor steht - so z.B. einer Klappe - durch Fremdeinwirkungen erfaßt werden. Bei entsprechender Programmierung der die Antriebsimpulse für die Wicklungen erzeugenden Ansteuerschaltung kann erreicht werden, daß dann, wenn die Klappe in eine bestimmte Stellung gefahren wurde und danach durch äußere Krafteinwirkung verstellt wird, die Ansteuerschaltung nach Wegfall der Störkraft die Klappe wieder in deren Sollstellung fahren kann. Ist die Störung hingegen von Dauer, kann sie jedenfalls erkannt und ggfs. im Sinne einer Lageregelung durch Anpassung anderer Regelgrößen die Auswirkung des Störeinflusses minimiert werden.

Als weiterer Vorteil kann genutzt werden, daß der Schrittmotor der Einrichtung beim Betrieb als Encoder eine verschleißbehaftete mechanische Rastung für ein verstellbares Bedienelement überflüssig macht, da das Magnetfeld des Schrittmotors ein erwünschtes Rastmoment ohnehin bewirkt. Dadurch kann die Verschleißarmut eines entsprechenden Antriebs einfach maximiert werden.

Vorteilhafte Weiterbildungen sind nach Lehre der abhängigen Ansprüche 2 bis 10 möglich. Demnach kann die Einrichtung sie vorteilhaft auch in Verbindung mit einem Bedien- bzw. Stellelement in einem Fahrzeug und dieshinsichtlich insbesondere in Verbindung mit einem Bedienelement einer Heiz- oder Klimaanlage betrieben werden.

Alle diese Vorteile werden erzielt in Verbindung mit dem globalen Vorteil einer sehr hohen Immunität der Einrichtung gegenüber allfälliger Störspannungen, welche der speisenden Versorgungsgleichspannung im praktischen Betrieb überlagert sein können.

Ein Ausführungsbeispiel der erfindungsgemäßen Einrichtung ist in der Zeichnung dargestellt und nachfelgend erläutert. Es zeigen:
- **Figur 1**: ein schematisches Schaltbild der Einrichtung;
- **Figur 1a**: eine beispielhafte schematische Darstellung der vollständigen Betriebsbeschaltung der Treiberendstufe 15A stellvertretend auch für die übrigen Treiberendstufen 15B bis 15D in Figur 1;
- **Figur 2**: ein schematisches Zeitdiagramm verschiedener Spannungen an Knoten A bis F und INH in der Einrichtung gemäß Figur 1.

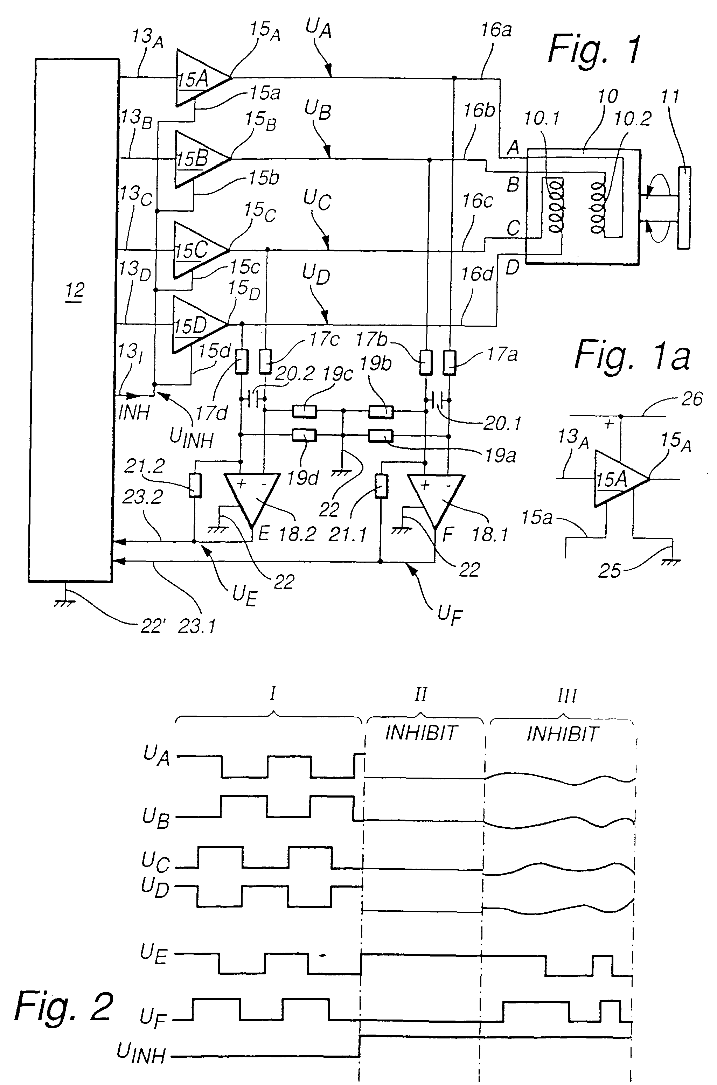

Gemäß **Figur 1** ist ein Mehrphasen-Schrittmotor 10 in beliebiger Weise mit einem Stellelelement 11, beispielsweise ausgebildet als Bedienhandhabe, drehschlüssig gekuppelt. Beispielsweise kann diese Kupplung über eine Achse oder über eine komplexe Mechanik verwirklicht sein, die jedenfalls bewirkt, daß bei einer Betätigung von Hand des Stellelements 11 der Rotor des Schrittmotors 10 in elektrisch nicht angesteuertem Zustand sich mitdreht.

Der Schrittmotor 10 weist wenigstens zwei Wicklungen 10.1 und 10.2 und wenigstens vier Wicklungsanschlüsse A, B, C und D auf. Die Wicklungen können voneinander isoliert sein oder gleichwohl galvanisch miteinander verbunden sein, beispielsweise an Mittenanzapfungen. Ein entsprechender Anschluß ist gestrichelt dargestellt und mit 24 gekennzeichnet.

Zur logischen Ansteuerung des Motors 10 umfaßt die Vorrichtung eine spezielle Motorsteuerschaltung 12, die beispielsweise als applikationsspezifischer Schaltkreis oder in der Art eines Mikrorechners, insbes. Microcontrollers, realisiert sein kann. Sie liegt versorgungsmäßig zwischen einem Massepotential 22' und einer Versorgungsschiene 26'. Des weiteren besitzt sie wenigstens fünf Ausgänge 13_{A} bis 13_{D} und 13_{I} (INH) und zwei Eingänge 23.1 und 23.2. Dabei ist der Ausgang 13_{A} dem Wicklungsanschluß A, der Ausgang 13_{B} dem Wicklungsanschluß B, der Ausgang 13_{C} dem Wicklungsanschluß C und der Ausgang 13_{D} dem Wicklungsanschluß D des Schrittmotors 10 zugeordnet.

Die vorgenannten Steuerausgänge sind an entsprechende Eingänge entsprechender Treiberendstufen 15A, 15B, 15C, 15D geführt, deren Ausgänge 15_{A} bis 15_{D} über Leitungen 16a bis 16d mit den Wicklungsanschlüssen A bis D des Schrittmotors 10 verbunden sind. Die Treiberendstufen 15A, 15B, 15C und 15D weisen des weiteren jeweils einen Inhibit-Eingang 15a, 15b, 15c, 15d auf, die mit dem Ausgang 13_{I} der Motorsteuerschaltung 12 verbunden und insoweit simultan ansteuerbar sind.

Die Wicklungsanschlüsse A und B sind jeweils über einen entsprechenden Widerstand 17a bzw. 17b mit dem invertierenden bzw. nicht invertierenden Eingang eines ersten Operationsverstärkers 18.1 wirkverbunden. Die beiden vorgenannten Verstärkereingänge sind jeweils über einen entsprechenden Widerstand 19a bzw. 19b mit dem Massebezugspotential 22 des Verstärkers 18.1 verbunden. Vorzugsweise können sie noch über eine Querkapazität 20.1 miteinander gekoppelt sein.

Die Wicklungsanschlüsse C und D sind jeweils über einen entsprechenden Widerstand 17c bzw. 17d mit dem invertierenden bzw. nicht invertierenden Eingang eines zweiten Operationsverstärkers 18.2 wirkverbunden. Die beiden vorgenannten Verstärkereingänge sind jeweils über einen entsprechenden Widerstand 19c bzw. 19d mit dem Massebezugspotential 22 des Verstärkers 18.2 verbunden. Vorzugsweise können sie noch über eine Querkapazität 20.2 miteinander gekoppelt sein.

Die Massepotentiale der beiden Verstärker 18.1 und 18.2 sind dabei in der Regel als identisch anzusehen, da die Verstärker samt Beschaltung in der Praxis auf einem sehr kleinen Raum unterbringbar sind, innerhalb dessen nur verschwindend kleine Massespannungsabfälle auftreten; deshalb sind sie einheitlich mit 22 gekennzeichnet. Je nachdem, ob die Eingänge 23.1 analoge oder digitale sind, können das Massepotential 22' der Anteuerschaltung 12 und das vorgenannte Massepotential 22 miteinander identisch sein oder es können dazwischen geringe Spannungsunterschiede zugelassen werden.

Der nichtinvertierende Eingang eines jeden der beiden vorgenannten Verstärker 18.1 und 18.2 ist über einen Widerstand 21.1 bzw. 21.2 mit dem entsprechenden Verstärkerausgang F und E verbunden. Die Ausgänge F und E sind ihrerseits jeweils mit entsprechenden Eingängen 23.1 und 23.2 der Motorsteuerschaltung 12 verbunden.

In **Figur 1a** ist der Vollständigkeit halber die vollständige Betriebsbeschaltung der Treiberendstufen 15A bis 15B gezeigt. Demnach sind die einzelnen Treiberenstufen bei bipolarem Zweiphasenbetrieb des Schrittmotors 10 in der Regel an eine gemeinsame Masse 25 und eine Versorgungsschiene 26 geschaltet, die hier beispielhaft als positiv angenommen ist.

Die vorbeschriebene Beschaltung der Verstärker 18.1 und 18.2 bewirkt eine gewisse Hysterese bei hoher Unterdrückung eingangsseitig anstehender Gleichtaktsignale.

Die Verstärker 15A bis 15D sind so beschaffen, daß ihre Ausgangsimpedanz infolge eines entsprechenden Ansteuersignals an ihren Inhibit-Eingängen 15ₐ bis 15_{d} von dem zur Betriebsansteuerung des Motor erforderlichen relativ niedrigen Wert auf einen sehr hohen Wert springt, vergleichbar der von logischen CMOS-Schaltkreisen bekannten Tri-State-Ausgangscharakteristik (Dies gilt für Spannungs- oder Stromausgänge der Verstärker gleichermaßen).

Die durch diese Eigenschaften bewirkte Funktion wird nunmehr anhand des Zeitdiagrammes gemäß Figur 2 ersichtlich.

Dort sind die an den Wicklungsanschlüssen A bis D abnehmbaren Spannungen U_{A} bis U_{D} über den an den Ausgängen F und E der Operationsverstärker 18.1 und 18.2 abnehmbaren Spannungen U_{E} und U_{f} aufgetragen, und zwar für drei verschiedene aneinander anschließende Zeitphasen I, II und III.

In der Phase I werden die Verstärker 15A bis 15D vom Ausgang 13_{I} der Ansteuerschaltung 12 z.B. mit dem logischen Pegel U_{INH} = Low angesteuert, so daß ihre Ausgänge die Wicklungen mit eingeprägten Wicklungsspannungen U_{A} bis U_{D} beaufschlagen; gleichwohl wäre - wie oben erwähnt - die Speisung der Wicklungen auch mit eingeprägten Strömen möglich.

Ab der Phase II hat der am Ausgang 13_{I} der Ansteuerschaltung 12 ausgegebene logische Pegel auf U_{INH} = High gewechselt. Die dadurch aktivierte Inhibit-Funktion läßt die Ansteuersignale an den Ausgängen 13_{A} bis 13_{D} nicht mehr an die Ausgänge 15_{A} bis 15_{D} der Verstärker 15A bis 15B gelangen und schaltet die Wicklungsanschlüsse A bis D hochohmig frei.

Diese Funktion kann vorgesehen sein, um beispielsweise bei einem Initialisierungslauf gegen einen Anschlag die Ansteuerung des Motors 10 zu unterbinden. Hierbei kann nämlich die Ansteuerung nicht nach Ausgabe einer im voraus festliegenden Anzahl von Impulsen abgeschlossen werden, da bei einem solchen Lauf die Ansteuerschaltung 12 ja noch die Anschlagsposition sucht, ab welcher dann erst definierte Positionen mit entsprechend abgezählten Schrittimpulsen erreicht werden können.

Dem Diagramm liegt zugrunde, daß der Rotor des Motors 10 in der Phase II eine stabile Ruhelage eingenommen hat, d.h. (noch) nicht durch externe Momente in Drehbewegung gebracht worden ist; dementsprechend sind die Spannungen U_{A} bis U_{D} an seinen Wicklungsanschlüssen A bis D auf Null abgefallen.

Es ist ersichtlich, daß sich aufgrund der Hysteresebeschaltung der Verstärker 18.1 und 18.2 die im Zeitpunkt der Freischaltung der Wicklungen (d.h. am Schluß der Phase I) an den Ausgängen E und F aktuell anstehenden Spannungen U_{E} und U_{F} halten, d.h. nicht mehr ändern, m.a.W. also der zuletzt erreichte logische Zustand an den Eingängen 23.1 und 23.2 der Ansteuerschaltung 12 permanent erhalten bleibt.

In der Phase III ist der logische Pegel des Inhibit-Signals an den Eingängen 15ₐ bis 15_{d} unverändert U_{INH} = High, so daß die Wicklungsanschlüsse A bis D freigeschaltet bleiben.

Allerdings wird der Rotor des Schrittmotors 10 nunmehr durch ein extern eingeleitetes Moment bewegt, beispielsweise infolge Verstellung von Hand. Aufgrund dieser Bewegung werden die in Phase III ersichtlichen analogen Spannungsverläufe U_{A} bis U_{D} im Millivoltbereich an den Anschlüssen A bis D generiert.

Sobald also die durch Fremdeinwirkung induzierten Spannungspegel eine solche Größe erreichen, daß an den Verstärkern 18.1 und 18.2 deren Hystereseschwellen überwunden werden, springen an deren Ausgängen E und F die dort zuvor gehaltenen logischen Pegel auf den jeweils komplementären logischen Pegel.

Beim Durchdrehen z.B. von Hand ergeben sich in der Phase III folglich - stetig ausgehend von den jeweils zuletzt gehaltenen, insoweit also gespeicherten Spannungspegeln - an den Ausgängen E und F der beiden Differenzverstärker 18.1 und 18.2 die Spannungsverläufe U_{E} und U_{F}.

Dies bedeutet, daß der Schrittmotor 10 in Verbindung mit den beschriebenen Elementen als Encoder wirkt, indem er auch bei fehlender elektrischer Ansteuerung vermittels der Spannungsverläufe U_{E} und U_{F} eine Information über seine Inbewegungsetzung, Drehgeschwindigkeit, Drehrichtung und die aktuell erreichte Winkelstellung vermittelt.

Wesentlich dabei ist nur, daß die Bedienungshandhabe bzw. ein sowohl durch dieselbe als auch durch den Motor 10 zu verstellendes Element dreh- bzw. kraftschlüssig mit dem Motor verbunden ist, da eine rutschende oder schleifende Verbindung zu Informationsverlust führte.

Auf diese Weise kann also im Zuge der Bedienung einer Handhabe, über die eine normalerweise elektrisch gesteuerte Verstellung irgend eines Elements auch manuell durchführbar sein soll bzw. ist, eine Kommunikation zwischen dem Bediener und der elektronischen Steuerung realisiert werden. Denn die Motorsteuerschaltung 12 ist durch Abzählung der logischen Pegelwechsel von U_{E} und U_{F} und Diskrimination der zeitlichen Abfolge dieser Wechsel in Bezug aufeinander zur Wahrnehmung in der Lage, in welche neue Position besagtes Element bzw. der damit verbundene Rotor des Motors - auch über beliebig viele Umdrehungen hinweg - ohne elektrischen Ansteuerung beispielsweise manuell gebracht worden ist.

Die Motorsteuerschaltung 12 hat insoweit immer eine Information, von welcher aktuellen Startposition aus der Rotor bzw. das kraft- und/oder drehschlüssig damit verbundene Element elektrisch wegverlagert bzw. verdreht werden muß, und zwar unabhängig davon, ob die jeweils letzte Position auf elektrischem Wege oder von Hand erreicht worden ist, und ohne daß es dazu eines besonderen Drehstellungssensors bedarf.

Daraus ist leicht ersichtlich, daß kraft dieser Betriebsweise des Schrittmotors als Encoder beispielsweise Lageänderungen und Verstellungen eines Elements, das verstellkraftschlüssig mit dem Schrittmotor verbunden ist - z.B. einer Luftleitklappe - durch Fremdeinwirkungen erfaßt werden.

Bei entsprechender Programmierung der die Antriebsimpulse für die Wicklungen erzeugenden Motorsteuerschaltung 12 kann erreicht werden, daß dann, wenn besagte Klappe in eine bestimmte Stellung gefahren wurde und danach durch äußere Krafteinwirkung verstellt wird, die Motorsteuerschaltung nach Wegfall der Störkraft die Klappe wieder in deren Sollstellung antreiben und fahren kann. Ist die Störung hingegen von Dauer, bleibt dies ebensowenig unerkannt und es kann im Sinne einer Lageregelung durch Anpassung anderer Regelgrößen die Auswirkung des Störeinflusses minimiert werden.

Wesentlich ist, daß der Schrittmotor 10 beim Betrieb als Encoder eine verschleißbehaftete mechanische Rastung für eine verstellbare Bedienhandhabe überflüssig macht, indem das Magnetfeld des Schrittmotors ein erwünschtes Rastmoment ohnehin bereitstellt. Dadurch kann die Verschleißarmut eines entsprechenden Antriebs einfachst maximiert werden.

Die aus **Figur 1** ersichtlichen Kapazitäten 20.1 und 20.2, die die Eingänge der Verstärker 18.1 und 18.2 für hochfrequente bzw. schnelle Änderungen der Eingangsgröße kurzschließen, bewirken eine Dämpfung bzw. Abfilterung von beispielsweise aus der Fahrzeugbordnetzumgebung eingestreuten Störspikes insbesondere im Augenblick des manuellen Drehbeginns, wobei die in den Wicklungen des Schrittmotors induzierten Spannungen in Relation zu möglichen Störspannungen noch relativ klein und noch im Anwachsen begriffen sind. Durch diese Maßnahme wird also vermieden, daß es zu störeinstrahlungsbedingten Informationsverlusten kommt. Des weiteren schützen sie vor dem Wirksamwerden in den Operationsverstärkern 18.1 und 18.2 von hochfrequenten Direkteinstrahlungen etwa aus Handfunktelefonen. Der eingangsseitig kapazitive Kurzschluß solcher Signale verhindert Ausgangssignalverwerfungen infolge Offsetverwerfungen infolge von inneren Gleichrichtereffekten in den Operationsverstärkern 18.1 und 18.2 unter elektromagnetischer Hochfrequenzeinstrahlung.

In diesem Zusammenhang erweist sich als vorteilhaft, daß die Eingänge 23.1 und 23.2 kostengünstig als Digitaleingänge ausgeführt sein können. In diesem Falle stört eine innerhalb Grenzen liegende Spannungsdifferenz zwischen den Potentialen 22 und 22' nicht. Dies ermöglicht im Falle großer Distanz zwischen den Treiberendstufen 15A bis 15D und dem Schrittmotor 10 zwecks Störverminderung die Verstärker 18.1 und 18.2 samt Beschaltung beim Schrittmotor 10 unterzubringen. Es werden dann über große Distanz nicht die (sehr geringen) analogen Spannungen U_{A}bis U_{D} gemäß Phase III gemäß **Figur 2**, sondern die wesentlich störfesteren und an den Eingängen 23.1 und 23.2 leicht zu entstörenden digitalen Spannungen UE und UF vom Schrittmotor 10 zur Ansteuerung 12 rückübertragen. Dies läßt eine Fortbildung dergestalt zu, daß die Verstärker 18.1 und 18.2 einschließlich der Widerstände 17a bis 17d, 19a bis 19d sowie 21.1 und 21.2 innerhalb einer metallischen Abdeckung oder Gehäuses des Schrittmotors untergebracht werden. Unter bestimmten Vorausetzungen kann so die HF-Einstrahlstörfestigkeit maximiert werden.

Die Erfindung schließt als Weiterbildung ein, daß - bis auf den Schrittmotor - sowohl die Ansteuerschaltung 12 als auch die Schritttreiberstufen 15A bis 15D als auch die Differenzverstärker mit Hysterese 18.1 und 18.2 sowie deren Verbindungen untereinander als einkörperliche integrierte Schaltung monolithisch verwirklicht sind.

Die Erfindung schließt als Weiterbildung des weiteren jede beliebige Wicklungskonfiguration des Schrittmotors mit ein, d.h. auch Wicklungen die aus mehr als zwei Teilwicklungen bestehen, die voneinander isoliert angezapft sein können. Sie ist demgemäß auch nicht auf eine bestimmte Anzahl von Schritttreibern beschränkt.

Die Erfindung schließt als Weiterbildung auch eine Ausbildung der Einrichtung zur Verstellung eines Stellelements in einem Fahrzeug und in dieser Hinsicht insbesondere zur Verstellung eines normalerweise auch manuell betätigbaren Bedienelements der Heiz- oder Klimaanlage ein.

## Patentansprüche

1. Einrichtung zum Antrieb eines Stellelements (11) mittels eines Schrittmotors (10), dessen Rotor dreh- und/oder kraftschlüssig mit dem Stellelement (11) verbunden ist, und wobei letzteres samt Rotor auch ohne elektrische Ansteuerung des Schrittmotors durch Einwirken einer/s externen Kraft oder Moments verstellbar ist, mit einer Antriebsimpulse für die Wicklungen erzeugenden Ansteuerschaltung (12),
**dadurch gekennzeichnet**,
- daß der Rotor ein Permanentmagnetrotor ist und der Schrittmotor wenigstens zwei Antriebswicklungen (10.1, 10.2) aufweist;
- daß die Ansteuerschaltung (12) neben den Ausgängen zur Ansteuerung der Motorwicklungen (13A, 13B, 13_{C}, 13_{D}) wenigstens zwei Eingänge (23.1, 23.2) zum Empfang von wenigstens zwei Stellungssignalen (U_{E}, U_{F}) und noch einen weiteren Ausgang (13_{I}) zur Ausgabe eines Inhibit-Signals aufweist;
- daß die Einrichtung von den Ausgängen zur Ansteuerung der Motorwicklungen (13_{A}. 13_{B}, 13_{C}, 13_{D}) angesteuerte Schritttreiberstufen (15A, 15B, 15C, 15D) aufweist, von deren Ausgängen entsprechende Enden der wenigstens zwei Antriebswicklungen (10.1, 102.) jeweils mit Schrittimpulsen beaufschlagbar sind;
- daß jede der Schritttreiberstufen (15A bis 15D) einen besonderen Eingang zum Empfang des Inhibit-signals (15a bis 15d) aufweist und daß jeder dieser Eingänge mit dem weiteren Ausgang (13_{I}) der Ansteuerschaltung (12) verbunden ist und ferner jede Schritttreiberstufe (15A bis 15D) so beschaffen ist, daß sie bei Empfang eines Inhibit-Signals den ausgangsseitig angesteuerten Wicklungsanschluß (A bis D) hochohmig freischaltet;
- daß je zwei Anschlüsse wenigstens zweier Wicklungen (10.1, 10.2) des Schrittmotors (10) mit den zwei Eingängen wenigstens zweier Differenzverstärker (18.1, 18.2) wirkverbunden sind, welche mit einer definierten Hysterese ihres Eingangs-/Ausgangsverhaltens ausgebildet sind, und
- daß die Ausgangssignale (U_{E}, U_{F}) dieser Verstärker (18.1, 18.2) als Iststellungssignale den wenigstens zwei Eingängen (23.2, 23.1) der Ansteuerschaltung (12) zugeführt sind.

2. Einrichtung nach Anspruch 1,
**dadurch gekennzeichnet**,
- daß sowohl die Ansteuerschaltung (12) als auch die Schrittreiberstufen (15A bis 15D) als auch die Differenzverstärker mit Hysterese (18.1, 18.2) und deren Verbindungen untereinander (13_{A} bis 13_{D}, 13_{I}, 17ₐ bis 17_{d}, 19ₐ bis 19_{d}, 20.1, 20.2) in Form einer einkörperlichen integrierten Schaltung monolithisch verwirklicht sind.

3. Einrichtung nach Anspruch 1,
**dadurch gekennzeichnet**,
- daß den zwei Eingängen der Differenzverstärker (18.1, 18.2) Filterkapazitäten (20.1, 20.2.) parallelgeschaltet sind.

4. Einrichtung nach Anspruch 2,
**dadurch gekennzeichnet**,
- daß die wenigstens zwei Wicklungen (10.1, 10.2) nicht galvanisch miteinander verbunden sind.

5. Einrichtung nach Anspruch 1,
**dadurch gekennzeichnet**,
- daß die Differenzverstärker durch resistiv mitgekoppelte (21.1, 21.2) Operationsverstärker realisiert sind, deren Eingänge jeweils über erste Widerstände (17a bis 17d) mit den Wicklungsanschlüssen (A bis D) und über zweite Widerstände (19a bis 19d) mit einem Bezugspotential (22) verbunden sind.

6. Einrichtung nach Anspruch 1,
**dadurch gekennzeichnet**,
- daß sie in Verbindung mit einem Bedien- bzw. Verstellelement in einem Fahrzeug vorgesehen ist.

7. Einrichtung nach Anspruch 6,
**dadurch gekennzeichnet**,
- daß das Stellelement ein Bedienelement der Heiz- oder Klimaanlage des Fahrzeugs ist.

8. Einrichtung nach Anspruch 1,
**dadurch gekennzeichnet**,
- daß sie in der Art eines Lageregelkreises betrieben wird, innerhalb dessen die Ansteuerschaltung (12) nach einer Fremdverstellung des Schrittmotors (10) aufgrund der/s Kraft oder Moments wenigstens zweitweise Korrekturantriebsimpulse abgibt, welche beim Verschwinden der die Fremdverstellung verursacht habenden Ursache eine Rückführung des Schrittmotors in die vor der Fremdverstellung vorhandene Rotorlage bewirken.

9. Einrichtung nach Anspruch 1,
**dadurch gekennzeichnet**,
- daß das magnetische Widerstandsmoment beim manuellen Verdrehen des elektrisch nicht angetriebenen Schrittmotors (10) als Rastmittel gegen eine unbeabsichtigte oder indifferente Verstellbarkeit einer mit dem Rotor des Schrittmotors (10) verbundenen Bedienungshandhabe ausgenutzt wird.

10. Einrichtung nach Anspruch 1,
**dadurch gekennzeichnet**,
- daß die Differenzverstärker (18.1, 18.2) an oder in dem Schrittmotor (10) angeordnet sind.

## Claims

1. A device to control an adjusting element (11) by means of a stepped motor whose rotor (10) is connected positively to the adjusting element (11), and whereby the latter together with the rotor can be adjusted without the electrical control of the stepping motor by the effect of an external force or torque, with a control circuit (12) which generates a control pulse for the windings (12),
**characterised in that**,
- the rotor is a permanent magnet and the stepping motor has at least two control windings (10.1, 10.2);
- in addition to the outputs to control the motor windings (13_{A}, 13_{B}, 13_{C}, 13_{D}), the control circuit (12) has at least two inputs (23.1, 23.2) to receive at least two position signals U_{E}, U_{F} and one further output (13_{I}) to emit an inhibit signal;
- the device has stepping driver stages (15A, 15B, 15C, 15D) to control the motor windings (13_{A}, 13_{B}, 13_{C}, 13_{D}) from whose outputs stepping pulses can be applied to the corresponding ends of the at least two control windings (10.1, 10.2);
- each of the stepping driver stages (15A to 15D) has a special input to receive the inhibitor signal (15a to 15d) and that each of these inputs is connected to a further output (13_{I}) in the control circuit (12) and moreover each stepping driver tape (15A to 15D) is designed such that when it receives an inhibit signal it releases the output-side controlled winding connection (A to D) at high resistance;
- each pair of connections on at least two windings (10.1, 10.2) in the stepping motor (10) is actively connected to the two inputs on at least two differential amplifiers (18.1, 18.2) which are designed with a defined hysteresis of its input/output behaviour, and
- the output signals U_{E}, U_{F} of this amplifier (18.1, 18.2) are fed into the at least two inputs (23.2. 23.1) in the control circuit (12) as actual position signals.

2. A device in accordance with Claim 1,
**characterised in that,**
- the control circuit (12), the stepping driver stages (15A to 15D), the differential amplifier with hysteresis (18.1, 18.2) and their connections to each other (13_{A} to 13_{D}, 13_{I}, 17ₐ to 17_{d}, 19ₐ to 19_{d}, 20.1, 20.2) are realised monolithically in the form of a single-bodies, integrated circuit.

3. A device in accordance with Claim 1,
**characterised in that**,
- filter capacities (20.1, 20.2) are connected in parallel to the two inputs in the differential amplifiers (18.1, 18.2).

4. A device in accordance with Claim 2,
**characterised in that**,
- the at least two windings (10.1, 10.2) are not galvanically connected.

5. A device in accordance with Claim 1,
**characterised in that,**
- the differential amplifiers are realised by means of resistively coupled (21.1, 21.2) operational amplifiers whose inputs are connected via first resistors (17a to 17d) to the winding connections A to D and via second resistors (19a to 19d) to a reference potential (22).

6. A device in accordance with Claim 1,
**characterised in that**,
- it is provided in a vehicle in conjunction with an operating or adjusting element.

7. A device in accordance with Claim 6,
**characterised in that,**
- the adjusting element is an operating element for a heating or air-conditioning system in a vehicle.

8. A device in accordance with Claim 1,
**characterised in that**,
- it is operated in the manner of a position adjusting device inside which the control circuit (12) emits correctional control pulses at least periodically following an external adjustment of the stepping motor (10) due to a force or torque which, when the effect which caused the external adjustment disappears, returns the stepping motor to the rotor position it occupied prior to the external adjustment.

9. A device in accordance with Claim 1,
**characterised in that,**
- when the stepping motor (10) is rotated manually rather than controlled electrically, the magnetic resistance moment is used as a locking means against the unintentional or indifferent adjustability of an operating handle connected to the rotor of the stepping motor (10).

10. A device in accordance with Claim 1,
**characterised in that,**
the differential amplifiers (18.1, 18.2) are positioned in or on the stepping motor (10).

## Revendications

1. Dispositif pour entraîner un actionneur (11) au moyen d'un moteur pas-à-pas (10) dont le rotor est relié à l'actionneur (11) en rotation et/ou par action de force, et dans lequel cet actionneur peut être déplacé, avec le rotor, même sans activation électrique du moteur pas-à-pas, par l'action d'une force extérieure ou d'un couple extérieur, le dispositif comprenant aussi un circuit d'activation (12) qui produit des impulsions d'entraînement pour les enroulements,
caractérisé
- en ce que le rotor est un rotor à aimant permanent et le moteur pas-à-pas présente au moins deux enroulements d'entraînement (10.1, 10.2) ;
- en ce que le circuit d'activation (12) comprend, en supplément des sorties pour l'activation des enroulements (13_{A}, 13_{B}, 13_{C}, 13_{D}) du moteur, au moins deux entrées (23.1, 23.2) pour la réception d'au moins deux signaux de position (U_{E}, U_{F}) et encore une autre sortie (13_{I}) pour l'émission d'un signal d'inhibition ;
- en ce que le dispositif présente des étages excitateurs pas-à-pas (15A, 15B, 15C, 15D) activés par les sorties pour l'activation des enroulements (13_{A}. 13_{B}, 13_{C}, 13_{D}) du moteur, et par les sorties desquels des extrémités correspondantes des au moins deux enroulements d'entraînement (10.1, 10.2) peuvent être attaquées par des impulsions de pas-à-pas ;
- en ce que chacun des étages excitateurs pas-à-pas (15A à 15D) présente une entrée particulière pour la réception du signal d'inhibition (15a à 15d) et en ce que chacune de ces entres est connectée à l'autre sortie (13_{I}) du circuit d'activation (12) et qu'en outre, chaque étage excitateur pas-à-pas (15A à 15D) est construit de manière à déconnecter la connexion d'enroulement (A à D) activée côté sortie sur une grande résistance ohmique à la réception d'un signal d'inhibition ;
- en ce que deux connexions d'au moins deux enroulements (10.1, 10.2) du moteur pas-à-pas (10) sont reliées fonctionnellement aux deux entrées d'au moins deux amplificateurs différentiels (18.1, 18.2) qui sont réalisés avec une hystérésis définie de leur comportement d'entrée/sortie, et
- en ce que les signaux de sortie (U_{E}, U_{F}) de ces amplificateurs (18.1, 18.2) sont transmis en qualité de signaux de position réelle aux au moins deux entrées (23.2, 23.1) du circuit d'activation (12).

2. Dispositif selon la revendication 1,
caractérisé
- en ce qu'aussi bien le circuit d'activation (12) que les étages excitateurs pas-à-pas (15A à 15D) et que les amplificateurs différentiels à hystérésis (18.1, 18.2) et les connexions qui les relient entre eux (13_{A} à 13_{D}, 13_{I}, 17ₐ à 17_{d}, 19ₐ à 19_{d}, 20.1, 20.2) sont réalisés de façon monolithique sous la forme d'un circuit intégré monocorps.

3. Dispositif selon la revendication 1,
caractérisé
- en ce que des capacités de filtrage (20.1, 20.2) sont connectées en parallèle avec les deux entrées des amplificateurs différentiels (18.1, 18.2).

4. Dispositif selon la revendication 2,
caractérisé
- en ce que les au moins deux enroulements (10.1, 10.2) ne sont pas connectés directement l'un à l'autre.

5. Dispositif selon la revendication 1,
caractérisé
- en ce que les amplificateurs différentiels sont réalisés sous la forme d'amplificateurs opérationnels qui sont couplés ohmiquement l'un à l'autre (21.1, 21.2) et dont les entrées sont connectées respectivement aux connexions (A à D) des enroulements, à travers des premières résistances (17a à 17d), et à un potentiel de référence (22) à travers des deuxièmes résistances (19a à 19d).

6. Dispositif selon la revendication 1,
caractérisé
- en ce qu'il est prévu dans un véhicule en combinaison avec un élément de manoeuvre ou de réglage.

7. Dispositif selon la revendication 6,
caractérisé
- en ce que l'actionneur est un élément de manoeuvre de l'installation de chauffage ou de climatisation du véhicule.

8. Dispositif selon la revendication 1,
caractérisé
- en ce qu'il est utilisé à la façon d'un circuit de régulation de position à l'intérieur duquel, après un décalage externe du moteur pas-à-pas (10) sous l'effet de la force ou du couple, le circuit d'activation (12) émet au moins temporairement des impulsions d'entraînement correctives qui, lors de la disparition de la cause qui a provoqué le décalage externe, déterminent un retour du moteur pas-à-pas à la position du rotor qui existait avant le décalage externe.

9. Dispositif selon la revendication 1,
caractérisé
- en ce que le moment résistant magnétique lors de la rotation manuelle du moteur pas-à-pas (10) qui n'est pas entraîné électriquement est utilisé comme moyen de blocage pour supprimer la possibilité de déplacement intempestif ou indifférent d'une manette de manoeuvre reliée au rotor du moteur pas-à-pas (10).

10. Dispositif selon la revendication 1,
caractérisé
- en ce que les amplificateurs différentiels (18.1, 18.2) sont agencés sur ou dans le moteur pas-à-pas (10).
